# NEUE EUROPÄISCHE PATENTSCHRIFT

(11) **EP 1 640 521 B2**
(45) Veröffentlichungstag und Bekanntmachung des Hinweises auf die Entscheidung über den Einspruch: **21.01.2015**
(45) Hinweis auf die Patenterteilung: 20.02.2008
(21) Anmeldenummer: 05027340.8
(22) Anmeldetag: 14.12.2005
(51) Int. Cl.: E04B 1/76

(54) **Verfahren zur Installation von Dämmplatten**
Procedure for mounting insulation panels
Procédé pour le montage de panneaux d'isolation

(30) Priorität: 14.12.2004 DE 102004060390
(43) Veröffentlichungstag der Anmeldung: 29.03.2006
(60) Teilanmeldung: 07112023.2
(73) Patentinhaber: Brillux GmbH & Co. KG, 48163 Münster (DE)
(72) Erfinder: Krechting, Andreas, 48624 Schöppingen (DE)
(74) Vertreter: Burrichter, Arwed Andreas

(56) Entgegenhaltungen:
- EP-A- 1 251 210
- EP-A1- 0 655 537
- EP-A1- 1 039 058
- EP-A2- 1 251 210
- DE-A1- 19 547 845
- DE-C1- 19 938 163
- US-A- 3 106 751

## Beschreibung

### Beschreibung

Die vorliegende Erfindung betrifft ein Verfahren nach dem Oberbegriff von Anspruch 1 und ein weiteres Verfahren nach dem Oberbegriff von Anspruch 3. Die Erfindung betrifft ferner Dämmsysteme, wie sie in den Ansprüchen 28 und 29 angebeben sind.

Derartige Verfahren werden beispielsweise bei der Wärmedämmung von Gebäuden eingesetzt, wobei die Dämmplatten auf Außenwänden eines Gebäudes befestigt werden. Auch werden derartige Dämmplatten zur Innendämmung eingesetzt. Ein Anwendungsbeispiel in dieser Hinsicht ist die Wand- oder Deckendämmung beispielsweise von Kellerräumen. Es ist auch möglich, derartige Dämmplatten im Zuge einer Fertigbauweise oder Holzrahmenbauweise vorzusehen. Dabei können die Dämmplatten insbesondere bereits vorgefertigt sein. Auch zur Sanierung oder Überdämmung von schadhaften Dämmsystemen kommen derartige Dämmplatten zum Einsatz.

Durch die Dämmplatten wird insbesondere ein Wärmedämm-Verbundsystem (WDVS) geschaffen. Bei der Dämmung von Gebäuden mit Wärmedämm-Verbundsystemen an Alt- und Neubauten werden die Dämmplatten in der Regel mit mineralisch gebundenen bzw. mineralisch gebundenen und organisch vergüteten Klebemitteln der Bindemittelbasis Kalk/ Zement am Untergrund verklebt. Die Klebemittel werden als Sackware oder in einem Silo zum Einsatzort (Baustelle oder industrielle Fertigung) angeliefert und dort vor der Verarbeitung mit Wasser gemischt. Das Mischen kann beispielsweise von Hand, mit einem Rührwerk oder mit Durchlauf- bzw. Zwangsmischern erfolgen.

Üblicherweise im Anschluss wird das Klebemittel in der Regel von Hand, seltener auch unter Verwendung einer Förderpumpe maschinell, auf die Dämmplatten aufgetragen. Danach erfolgt das Verkleben der Dämmplatten auf dem Untergrund, indem die Dämmplatten mit ihrer zu verklebenden Fläche mit dem Untergrund in Kontakt gebracht werden. Das Klebemittel vermittelt dabei den Kontakt zwischen den Dämmplatten und dem Untergrund. Gelegentlich wird der Kleber auch unter Verwendung einer Förderpumpe auf den Untergrund aufgespritzt. In diesem Fall werden die Dämmplatten in das nasse Kleberbett eingelegt. Anschließend wird das Klebemittel ausgehärtet.

In vereinzelten Fällen werden auch organisch gebundene Klebemassen verwendet, denen zur Abbindung Zement vor der Verarbeitung zugegeben wird. Diese werden in der Regel von Hand auf die Dämmplatten, gelegentlich auch auf den Untergrund, aufgetragen.

Auch das Verkleben von Dämmplatten mit organisch gebundenen Klebemassen ohne Zementzugabe ist möglich. Diese Klebemassen werden dann wiederum von Hand oder unter Verwendung von Förderpumpen maschinell auf die Dämmplatten oder den Untergrund aufgetragen.

Die üblicherweise zur Anwendung kommenden Klebematerialien sind beispielsweise beschrieben in Merkblatt Nr. 21 des Bundesausschusses für Farbe und Sachwertschutz (BFS), "Technische Richtlinien für die Verarbeitung von Wärmedämm-Verbundsystemen", Stand Oktober 1995, Absätze 2.3.1 und 2.4.1.

Im genannten Merkblatt Nr. 21 ist in Absatz 2.5.2.1 außerdem der Auftrag des Klebemittels auf der Dämmplatte beschrieben. In der vom Fachverband Wärmedämm-Verbundsysteme E. V. herausgegebenen Technischen Systeminfo Nr. 3: Wärmedämm-Verbundsysteme zum Thema Systemvielfalt", Seite 7, sind weiterhin mögliche Materialien und Verfahren zum Verkleben von Dämmplatte beschrieben.

Zur Zeit werden allein in Deutschland jährlich ca. 30 Mio. Quadratmeter Dämmplatten verklebt. Mit den bislang üblichen Verklebeverfahren müssen jährlich somit allein in Deutschland ca. 120 - 150 Mio. kg Klebemittel produziert, transportiert; in der Regel angemischt und verarbeitet werden.

Damit ist ein sehr hoher logistischer und zeitlicher Aufwand verbunden, der wiederum zu einem hohen Kostenaufwand führt. Hinzu kommt, dass die bekannten Klebemittel eine vergleichsweise lange Zeit zum Aushärten, beispielsweise durch Trocknung, benötigen. So sind vor einer möglichen Weiterbearbeitung eines WDVS, beispielsweise in Form von Schleifen oder Verdübeln und Armieren des Dämmstoffbelages, Wartezeiten von üblicherweise mindestens drei Tagen erforderlich. Dies vermindert die Produktivität der bekannten Verklebeverfahren.

Auf zahlreichen Untergründen, insbesondere bei auf Altbauten oder in Kellerräumen vorzufindenden Altanstrichen, besteht zudem bei zementhaltigen und/ oder wasserbeinhaltenden bzw. wasserbasierenden Klebern die Gefahr, dass unerwünschte Wechselwirkungen zwischen dem Klebemittel und dem Untergrund in Form einer Verseifung oder durch Aufweichen stattfinden. Eine Verseifung tritt dann auf, wenn vorhandene Altanstriche nicht alkalibeständig sind und von der hohen Alkalität eines zementhaltigen Klebemittels zerstört werden. Wenn Anstriche nicht ausreichend feuchtigkeitsresistent sind, können sie auch unter Einfluss des Wasseranteils im Kleber aufweichen. Beides kann zur Folge haben, dass ein Verlust der Verbundhaftung zwischen Kleber und Untergrund auftritt. Das WDVS weist somit ebenfalls eine mangelnde Verbundhaftung auf. Als Folge können hieraus Schäden am WDVS auftreten, die bis zu einem Verlust der Standsicherheit führen können.

Aus der EP 1251210 A ist ein Verfahren zum Anbringen von Dämmmaterialelementen an eine Gebäudewand bekannt, in dem ein aufschäumbares Material, beispielsweise ein Schaum auf Polyurethanbasis, auf das Dämmelement oder die Gebäudewand aufgebracht wird. Anschließend werden das Dämmelement und die Gebäudewand miteinander in Kontakt gebracht, woraufhin das aufschäumbare Material aushärtet.

Die DE-OS 2145 521 beschreibt ein Verfahren zur Herstellung einer Verbindung zwischen einer Verkleidungsplatte und Mauerwerk, wobei die Verbindung zwischen den anzubringenden Platten und dem Mauerwerk durch einen schäumenden Schaumstoff, der in auf der dem Mauerwerk zugewandten Seite der Platten durch ein Trägermaterial (beispielsweise durch Papierstreifen gebildete Taschen) eingebracht wird und dort aufschäumt.

Aus der DE 90 13 146 U1 ist eine Dämmstoffmatte zur Isolierung von Gebäuden bekannt, die aus Einzelfasern, insbesondere aus Stahlwelle, zusammengesetzt ist. Die Dämmstoffmatten können auf Gebäudewände aufgeklebt oder mittels Befestigungsmitteln auf der Gebäudewand gehalten werden.

Neben dem voranstehend erläuterten Stand der Technik ist aus der US 3 106 751 ein Wärmedämmsystem bekannt, bei dem zum Halten von Wärmedämmplatten Halteelemente vorgesehen sind.

Aus der EP 0 655 537 A1 ist des Weiteren ein Wärmedämmsystem bekannt, bei dem Winkelleisten an der jeweils zu dämmenden Wand montiert werden.

In der DE 100 15 124 A1 sind darüber hinaus aus Blech gefertigte Befestiger und Verbinder für Kunststoffschaumplatten beschrieben.

Aus der deutschen Gebrauchsmusterveröffentlichung DE 1891 159 ist schließlich eine Befestigungsvorrichtung für Wand- oder Deckenverkleidungen bekannt, die aus mehreren miteinander durch eine Nut-Feder-Verbindung verbundenen Paneelen aus Holz oder Kunststoff gebildet ist.

Ausgehend von dem erläuterten Stand der Technik lag der Erfindung die Aufgabe zugrunde, den Kostenaufwand, insbesondere den logistischen und zeitlichen Aufwand, beim Verkleben von Dämmplatten mit einem Untergrund zu verringern und gleichzeitig die Produktivität zu erhöhen. Außerdem soll ein sicheres Verkleben ohne die Gefahr von Schäden am Wärmedämm-Verbundsystem erreicht werden.

Diese Aufgabe wird jeweils durch die in Anspruch 1 und 3 angegebenen Verfahren gelöst. Dabei wird als Klebemittel ein Klebeschaum eingesetzt. Die Aufgabe wird außerdem gelöst durch Dämmsysteme mit den in den Ansprüchen 28 und 29 angegebenen Merkmalen.

Erfindungsgemäß wird Schaum eingesetzt, der eine gute Klebkraft aufweist. Der Schaum wird daher als Klebeschaum bezeichnet. Durch den Einsatz bzw. die Verwendung von Klebeschaum kann das Verkleben der Dämmplatten mit dem Untergrund mit im Vergleich zum Stand der Technik geringerem Kostenaufwand durchgeführt werden. So ist der Transport der Klebeschäume im Vergleich zu konventionellen Klebemitteln schneller und kostengünstiger möglich. Ein Anmischen der Klebemittel am Einsatzort entfällt ebenfalls, da die Klebeschäume bereits in ihrer für das Verkleben benötigten Zusammensetzung an den Einsatzort geliefert werden können. Die Verarbeitung des Klebeschaums ist somit im Vergleich zum Stand der Technik schneller, sauberer und einfacher durchzuführen. Hinzukommt, dass der erfindungsgemäß eingesetzte bzw. verwendete Klebeschaum schneller aushärtet als konventionelle Klebemittel, so dass eine schnellere Weiterbearbeitung des Wärmedämm-Verbundsystems möglich ist, als dies beim Einsatz konventioneller Klebemittel der Fall ist. Die Produktivität beim Verkleben von Dämmplatten mit einem Untergrund ist erfindungsgemäß somit erhöht.

Mit Klebeschaum entstehen außerdem keine in Bezug auf die Verbundhaftung nachteiligen Wechselwirkungen mit dem Untergrund. Es wird somit ein sicheres Verkleben und eine zuverlässige Verbundhaftung des Wärmedämm-Verbundsystems erreicht. Die Gefahr von Beschädigungen des WDVS ist erfindungsgemäß somit erheblich verringert. Außerdem werden durch den Einsatz eines Klebeschaums die Dämmeigenschaften des Wärmedämm-Verbundsystems gegenüber dem Stand der Technik verbessert.

Es ist gemäß der Erfindung grundsätzlich möglich, das Verarbeiten des Klebeschaums per Hand oder maschinell durchzuführen. Bei einer maschinellen Verarbeitung wird der Klebeschaum in der Regel über einen Schlauch auf die zu verklebenden Flächen gefördert.

Als zu verklebende Dämmplatten kommen grundsätzlich sämtliche bekannten Dämmplatten in Frage, die in Wärmedämm-Verbundsystemen oder anderen Dämmsystemen eingesetzt werden können. Dies gilt unabhängig von ihrer Güte (z.B. Festigkeit, Gewicht, Rohdichte, Lambda-Rechenwert, Farbe), der Schichtdicke oder dem Format (Länge und Breite), der Kantenausführung oder der Oberflächenbeschaffenheit. Beispielhaft für mögliche Plattenmaterialien genannt werden in dieser Hinsicht Expandierter Polystyrol-Hartschaum (EPS, Blockgeschäumt oder als Automatenware), Extrudierter Polystyrol-Hartschaum (XPS), Polyurethanschaum (PUR), Polyisicyanurat (PIR), Mineralwolle und Steinwolle (auch in Lamellenform), Mineralschaum (Kalzium-Silikat), Phenolharz (PF)-Hartschaum, Holzwolle, Holzweichfaser, Kork, Hanf, Schafswolle, etc.. Es ist dabei möglich, dass die Dämmplatten als Dampfbremse eine Beschichtung oder Kaschierung, insbesondere einseitig, beispielsweise aus Kunststoff oder Aluminium aufweisen. Selbstverständlich kann durch die Dämmplatten alternativ oder zusätzlich zur Wärmedämmung auch ein verbesserter Schalldämmwert erreicht werden.

Beim Verfahren nach Anspruch 1 kann der Klebeschaum vor dem in Kontakt bringen der zu verklebenden Fläche der Dämmplatte mit dem Untergrund auf eine zu verklebende Fläche der Dämmplatte und/oder auf den mit der Dämmplatte zu verklebenden Untergrund aufgebracht werden. Beim Verfahren nach Anspruch 3 wird der Klebeschaum vor dem in Kontakt bringen der zu verklebenden Fläche der Dämmplatte mit dem Untergrund auf eine zu verklebende Fläche der Dämmplatte und/oder auf den mit der Dämmplatte zu verklebenden Untergrund aufgebracht. Auf diese Weise kann in an sich bekannter Weise das Aufbringen des Klebemittels in besonders einfacher Weise erfolgen.

Der Klebeschaum kann dabei zum Verkleben der Dämmplatten auf die jeweils zu verklebende Dämmplatte aufgetragen werden. Das Auftragen kann beispielsweise gemäß der bekannten Randwulst-Punktmethode erfolgen. Anschließend wird die Dämmplatte mit ihrer zu verklebenden Fläche mit dem Untergrund in Kontakt gebracht. Es ist jedoch auch möglich, den Klebeschaum vor dem in Kontakt bringen der Dämmplatte mit dem Untergrund auf dem Untergrund aufzubringen. Natürlich ist es ebenfalls möglich, den Klebeschaum sowohl auf der Dämmplatte als auch auf dem Untergrund aufzubringen, um eine noch gleichmäßigere und vollständigere Verteilung des Klebemittels zwischen Dämmplatte und Untergrund zu erreichen.

Gemäß einer bevorzugten Ausgestaltung kann der Klebeschaum in komprimierter Form bereitgestellt werden. Der Klebeschaum expandiert in diesem Fall erst beim Austritt aus dem Aufbewahrungsbehälter und beim Auftragen auf die zu verklebende Fläche vor Ort. Durch eine solche Ausgestaltung kann der logistische Aufwand weiter verringert werden, da das zu transportierende Volumen von Klebeschaum weiter verringert wird. In besonderer Weise geeignet sind dabei sogenannte "Ort-Schäume", die erst am Verwendungsort verarbeitet werden. Für eine besonders einfache Verarbeitung, und um die Nachexpansion des aufgebrachten Klebeschaums zu begrenzen, kann der Schaum insbesondere schwachexpandierend sein. Vorzugsweise weist er dabei eine maximale nachträgliche Schaumexpansion von 1 bis 30 %, insbesondere von 5 bis 20 %, speziell 8 bis 15 % auf.

Als besonders geeignet erweisen sich sogenannte teilkollabierende Klebeschäume. Bei diesen verringert sich das Volumen des auf die Dämmplatte bzw. den Untergrund aufgetragenen Schaums innerhalb eines bestimmten Zeitintervalls um einen bestimmten Prozentsatz. Bevorzugt werden solche Schäume verwendet, bei denen die Volumenreduktion 1 bis 30 %, vorzugsweise 5 bis 20% und speziell 7 bis 15 % beträgt. Die Volumenreduktion erfolgt dabei bevorzugt innerhalb von 1 bis 30 Sekunden, vorzugsweise 3 bis 20 Sekunden und speziell 5 bis 10 Sekunden. Wie jeder Klebeschaum, vergrößern auch teilkollabierende Klebeschäume ihr Volumen während des Aushärteprozesses allmählich. Es hat sich hierbei gezeigt, dass teilkollabierende Klebeschäume beim Aushärten eine geringere Volumenexpansion aufweisen, was sich vorteilhaft bei der Befestigung der Dämmplatten auswirkt. Bevorzugt werden Klebeschäume eingesetzt, deren Volumenexpansion von ungehärtetem zum vollständig ausgehärtetem Zustand maximal 30 %, insbesondere maximal 20 % und besonders bevorzugt maximal 5 bis 10 % beträgt.

Der besondere Vorteil dieser Klebeschäume besteht darin, dass ein unkontrolliertes Abdrücken der Dämmplatte vom Untergrund oder ein nachträgliches Ausbeulen der Dämmplatte in jedem Falle vermieden wird.

Grundsätzlich sind erfindungsgemäß sämtliche bekannten Verfahren zum Aushärten von Klebemitteln möglich.

In Abhängigkeit von dem verwendeten Klebeschaum kann der Klebeschaum in besonders einfacher Weise über eine Trocknungszeit ausgehärtet werden. Es ist somit kein weiterer Bearbeitungsschritt für das Aushärten erforderlich. Es muss lediglich die im Vergleich zum Stand der Technik verkürzte Trocknung des klebeschaums abgewartet werden.

Es ist jedoch auch denkbar, den Klebeschaum durch UV-Bestrahlung auszuhärten. Auf diese Weise kann die erforderliche Zeit zum Aushärten weiter verkürzt werden. Die UV-Bestrahlung kann dabei alternativ oder zusätzlich zum Aushärten über eine Trocknungszeit eingesetzt werden.

Grundsätzlich ist es erfindungsgemäß denkbar, sämtliche bekannten Einkomponenten-Klebeschäume oder Mehr-, insbesondere Zweikomponenten-Klebeschäume einzusetzen. Insbesondere bei einer maschinellen Verarbeitung des Schaums kommen bevorzugt Zweikomponenten-Klebeschäume zum Einsatz. Zur Kontrolle bei der Verarbeitung und zur Prüfung ob der korrekte Klebeschaum eingesetzt wurde kann der Klebeschaum eingefärbt werden.

Gemäß einer bevorzugten Ausgestaltung kann ein organischer Klebeschaum eingesetzt werden. Organische Klebeschäume zeichnen sich durch eine besonders gute Klebkraft und Verarbeitbarkeit aus.

Es ist dabei insbesondere denkbar, einen Klebeschaum auf Basis von Polyurethan einzusetzen. Derartige PUR-Schäume werden in großen Mengen produziert und sind kostengünstig zu beschaffen. Außerdem weisen diese Schäume eine besonders gute Klebkraft und Verarbeitbarkeit auf.

Je nach den gewünschten Eigenschaften des Klebeschaums ist es jedoch auch denkbar, andere Ein- oder Mehr-, insbesondere Zweikomponentenschäume, einzusetzen, beispielsweise auf Basis von Phenolharz (PF), Latex, Polyethylen, Polyester, Polyisicyanurat (PIR) etc..

Gemäß einer bevorzugten Ausgestaltung kann der Klebeschaum eine Wärmeleitfähigkeit in einem Bereich von 0,020 bis 0,060 W/(m·K) aufweisen. Die Angabe der Wärmeleitfähigkeit erfolgt dabei gemäß der Norm DIN 52 612. Durch eine solche Wärmeleitfähigkeit werden die Dämmeigenschaften des Wärmedämm-Verbundsystems weiter verbessert.

Gemäß einer weiteren Ausgestaltung kann der Klebeschaum eine Druckspannung bei 10% Stauchung in einem Bereich von 3 bis 500 kPa aufweisen. Die Angabe der Druckspannung erfolgt gemäß der Norm ISO 844. Durch diese Ausgestaltung kann der Klebeschaum optimal auf die Belastbarkeit des Wärmedämm-Verbundsystems abgestimmt werden.

Der Klebeschaum kann weiterhin im geschäumten Zustand eine Rohdichte in einem Bereich von 10 bis 300 kg/m³ aufweisen. Durch eine solche Rohdichte kann der Klebeschaum in weiter optimierter Weise auf die Belastbarkeit des Wärmedämm-Verbundsystems abgestimmt werden.

Andere in Bezug auf den Betriebseinsatz vorteilhafte Eigenschaften erzeugende Kennwerte des Klebeschaums sind eine Zugfestigkeit gemäß DIN 53 455 von 10 bis 700 kPa, eine Reißdehnung gemäß DIN 53 455 von 5 bis 50%, eine Scherfestigkeit gemäß DIN 53 422 von 15 bis 300 kPa sowie eine Temperaturbeständigkeit von -40°C bis +130°C. Bezüglich der Baustoffklasse bzw. des Brandverhaltens haben sich insbesondere die Werte bzw. Klassifizierungen A1, A2, B1, B2, B3 bzw. A1, A2, B, C, D, E, F gemäß der Norm 4102-1 bzw. der Norm DIN EN 13501-1 als vorteilhaft erwiesen.

Der Klebeschaum kann grundsätzlich in sämtlichen geeigneten Behältern mit einer an den Verwendungszweck angepassten Größe bereitgestellt werden.

Gemäß einer besonders praxisgemäßen Ausgestaltung kann der Klebeschaum in Kunststoff- oder Metalldosen bereitgestellt werden. Auf diese Weise ist der Transport und die Verarbeitung in besonders einfacher Weise möglich. Dies gilt insbesondere, wenn der Klebeschaum in komprimierter Form bereitgestellt wird. Bei dem Metall kann es sich in bekannter weise um Weißblech oder Aluminium handeln. Derartige Dosen können beispielsweise einen Schraubverschluss aufweisen, der auf eine handelsübliche Ausbringpistole aufgeschraubt werden kann. Denkbar ist jedoch auch die Abfüllung und Belieferung in Dosen mit Ausbringröhren. Die Ausbringröhren können insbesondere zum einmaligen Gebrauch, aber auch zum mehrmaligen Gebrauch vorgesehen sein. Grundsätzlich sind in Abhängigkeit von dem Einsatzzweck sämtliche Dosengrößen denkbar. Erfindungsgemäß wird die jeweils zu verklebende Dämmplatte durch mindestens ein Fixiermittel auf dem Untergrund fixiert. Auf diese Weise wird eine präzise Fixierung der Dämmplatten in der gewünschten Position relativ zum Untergrund und zu den benachbarten Platten ermöglicht. Insbesondere dient das Fixiermittel der temporären Fixierung der Dämmplatten auf dem Untergrund, nämlich bis zum endgültigen Aushärten des Klebeschaums, welcher dann die Halte- und Fixierfunktion der Dämmplatten übernimmt.

Bei einem vor dem Aufbringen der Dämmplatte auf dem Untergrund erfolgenden Aufbringen des Klebeschaums auf die Dämmplatte bzw. den Untergrund wird verhindert, dass die verklebten Dämmplatten durch eine Expansion bzw. Nachexpansion des zwischen Dämmplatte und Untergrund befindlichen Klebeschaums ihre Lage verändern können. Durch eine Expansion bzw. Nachexpansion des Klebeschaums kann es, wie bereits erwähnt, insbesondere zu einem unkontrollierten Abdrücken der Dämmplatten von dem Untergrund kommen. Dies wird durch diese Ausgestaltung sicher dadurch vermieden, dass infolge der Fixierung der gewünschten Position der Dämmplatte relativ zum Untergrund und zu den benachbarten Platten eine gegebenenfalls erfolgende Expansion bzw. Nachexpansion ausschließlich parallel zum Untergrund erfolgt. Grundsätzlich ist es denkbar, dass die Fixiermittel eine geringfügige, für die Funktion und Optik des Dämmsystems unkritische Bewegung der Platten zulassen.

Zweckmäßigerweise werden die Fixiermittel zusammen mit einem teilkollabierenden Klebeschaum eingesetzt. Hierbei wird das die Dämmplatte bis zum endgültigen Aushärten des Klebeschaums in Position haltenden Fixiermittel sowie die Verbindung des Fixiermittels mit dem Untergrund durch die nachträgliche Volumenverminderung des teilkollabierenden Klebeschaums mechanisch entlastet.

Mithilfe der Fixierelemente können die Dämmplatten beispielsweise an einer Gebäudefassade in sehr einfacher Weise absolut lotrecht und eben angebracht werden. Ferner können mittels der Fixierelemente auch Unebenheiten des Untergrundes ausgeglichen werden.

Das verwendete Fixiermittel kann aus den verschiedensten Werkstoffen, beispielsweise aus Metall oder einem polymeren Kunststoff, gefertigt sein.

Die Fixiermittel können wiederverwendbar ausgestaltet sein. Dazu können die Fixiermittel nach dem Aushärten des Klebeschaums gegebenenfalls von den Dämmplatten entfernt werden. Auch ein Entfernen der Fixiermittel ohne eine anschließende Wiederverwendung ist selbstverständlich denkbar.

Nach einer bevorzugten Ausgestaltung der Erfindung erfolgt die Verbindung zwischen dem Fixiermittel und dem Untergrund ausschließlich durch Verkleben.

Erfindungsgemäß weist das Fixiermittel zwei winklig, insbesondere rechtwinklig, zueinander angeordnete Schenkel auf, wobei zum Fixieren der Dämmplatte der erste Schenkel an dem Untergrund befestigt wird, und der zweite Schenkel an der Dämmplatte befestigt wird. Mit winklig angeordneten Schenkeln ist das Fixieren der Dämmplatten auf dem Untergrund in besonders sicherer und einfacher Weise möglich. Sind die Schenkel im rechten Winkel angeordnet, so wird das Fixieren bei den üblicherweise verklebten quaderförmigen Dämmplatten weiter vereinfacht.

Werden die Dämmplatten beispielsweise auf einer Gebäudefassade angebracht, kann ein zwei winklig, insbesondere rechtwinklig, zueinander angeordnete Schenkel aufweisendes Fixiermittel in besonders zweckmäßiger Weise bei der Abstützung von Dämmplatten im Sturzbereich von Öffnungen, für die Anbringung der Dämmplatten oberhalb des Sockelbereiches oder auch seitlich bei der Detailausbildungen im Bereich von Fensterbänken o. ä. eingesetzt werden.

Der erste Schenkel kann mittels eines Klebemittels, insbesondere eines doppelseitig klebenden Klebebandes, an dem Untergrund befestigt werden. Die Befestigung des ersten Schenkels wird somit vereinfacht. Selbstverständlich sind dabei sämtliche geeigneten Klebemittel denkbar. Als besonders geeignet erweisen sich hochviskose Klebstoffe, insbesondere Gelkleber. Hierbei zeigen Gelkleber auf Acrylatbasis besonders gute Gebrauchseigenschaften. Die hohe Kleberschichtdicke dieser Klebertypen von mehreren Millimetern ermöglicht exzellente Kleberesultate sowohl auf glatten als auch auf strukturierten Untergründen.

Um eine besonders sichere und belastbare Befestigung des ersten Schenkels an dem Untergrund zu erreichen, ist es auch möglich, den ersten Schenkel mittels einer mechanischen Verankerung an dem Untergrund zu befestigen. Die mechanische Verankerung kann alternativ oder zusätzlich zu einem Verkleben des Schenkels erfolgen. Die mechanische Verankerung ist insbesondere vorteilhaft bei Untergründen, die sich nicht oder nur unzureichend für ein Verkleben eignen. Für die mechanische Verankerung eignen sich beispielsweise Nägel oder Schrauben, gegebenenfalls unter Verwendung von entsprechenden Dübeln.

In praktisch besonders einfacher Weise wird zum Befestigen des zweiten Schenkels an der Dämmplatte beim Verfahren gemäß Anspruch 1 und beim System gemäß Anspruch 28 ein Stift, insbesondere ein Nagel, durch den zweiten Schenkel hindurch in die Dämmplatte eingedrückt. Der zweite Schenkel kann dazu eine geeignete Bohrung aufweisen. Auf diese Weise wird in einfacher Weise eine sichere Befestigung des zweiten Schenkels an der Dämmplatte erreicht. Bei dem Stift kann es sich insbesondere um einen Kunststoff- oder Metallstift, insbesondere einen Kunststoff- oder Metallnagel handeln.

Beim Verfahren gemäß Anspruch 3 und beim Dämmsystem gemäß Anspruch 29 ist der zweite Schenkel an der Dämmplatte befestigt, indem der zweite Schenkel einen Dorn aufweist, der zum Befestigen des zweiten Schenkels an der Dämmplatte in die Dämmplatte eingedrückt wird bzw. ist. Der Dom kann dazu insbesondere beweglich ausgestaltet sein. Bei den üblicherweise für die Dämmplatten eingesetzten Materialien ist das Eindrücken des Doms in einfacher Weise möglich.

Das jeweilige Mittel zum Befestigen des zweiten Schenkels an der Dämmplatte gewährleistet eine sichere und belastbare Befestigung des zweiten Schenkels in der Dämmplatte und somit ein sicheres Fixieren der Dämmplatte auf dem Untergrund bis zum Abschluss der Schaumexpansion und Schaumaushärtung. Insbesondere kann dabei eine kraftschlüssige Verbindung zwischen zweitem Schenkel und Dämmplatte erreicht werden.

Beim Verfahren gemäß Anspruch 1 und beim Dämmsystem gemäß Anspruch 28 wird der zweite Schenkel an einer seitlichen Kante der Dämmplatte befestigt. Auf diese Weise wird die Befestigung des Schenkels an der Dämmplatte insbesondere bei rechtwinklig angeordneten Schenkeln vereinfacht.

Dabei kann in der mit dem zweiten Schenkel zu befestigenden seitlichen Kante der Dämmplatte eine Vertiefung für den zweiten Schenkel vorgesehen werden. Die Vertiefung kann insbesondere den Abmessungen des zweiten Schenkels entsprechen. Es ist natürlich auch denkbar, die Vertiefung mit anderen Abmessungen als denen des Schenkels zu versehen, wenn dies zweckmäßig erscheint. So ist es möglich, die Vertiefung über die gesamte Fläche der mit dem zweiten Schenkel zu befestigenden seitlichen Kante der Dämmplatte vorzusehen. Auf diese weise wird bei mehreren auf dem Untergrund verklebten Platten ein Spalt im Bereich der mit dem zweiten Schenkel zu befestigenden seitlichen Kante der Dämmplatte erzeugt. Eine solche Ausgestaltung erlaubt eine flexible Anpassung an unterschiedliche Fixiermittel. Durch das Vorsehen einer Vertiefung kann erreicht werden, dass der zweite Schenkel von der Oberfläche her im befestigten Zustand nicht sichtbar ist. Insbesondere wenn mehrere Dämmplatten verklebt werden, kann auf diese weise trotz des zwischen den Kanten befindlichen zweiten Schenkels ein fugenloses Verkleben der Dämmplatten erfolgen. Es wird ein geschlossenes Fugenbild erreicht, so dass es nicht zu ungewollten Wärmeverlusten durch etwaige zwischen den Platten bestehende Fugen kommen kann. Sowohl das optische Erscheinungsbild als auch die technische Funktion des Dämmsystems können so verbessert werden.

Die Vertiefung kann beispielsweise durch ein Herausschmelzen oder Herausschneiden von Material aus den Dämmplatten erzeugt werden.

Gemäß einer weiteren praxisgemäßen Ausgestaltung des Verfahrens gemäß Anspruch 1 und des Dämmsystems gemäß Anspruch 28 können mehrere Dämmplatten mit dem Untergrund verklebt werden. So wird eine umfassende Dämmung beispielsweise eines Gebäudes erreicht. Diese Maßnahme wird beim Verfahren gemäß Anspruch 3 und beim Dämmsystem gemäß Anspruch 29 immer verwirklicht.

Im Zuge einer Vereinfachung der Anbringung der Dämmplatten, aber auch unter Gesichtspunkten des Umweltschutzes ist es wünschenswert, die Zahl der einzusetzenden Fixiermittel zu begrenzen. Zu diesem Zweck kann es bei mehreren zu verklebenden Dämmplatten vorgesehen sein, dass jeweils zwei zu verklebende Dämmplatten durch mindestens ein gemeinsames Fixiermittel auf dem Untergrund fixiert werden. Die beiden zu verklebenden Dämmplatten sind dabei benachbart angeordnet. Durch eine solche Ausgestaltung kann die Zahl der benötigten Fixiermittel reduziert werden.

Das gemeinsame Fixiermittel kann dazu zwei winklig, insbesondere rechtwinklig, zueinander angeordnete Schenkel aufweisen, wobei zum Fixieren der Dämmplatten der erste Schenkel an dem Untergrund befestigt wird, und der zweite Schenkel an beiden Dämmplatten befestigt wird.

Dazu kann der zweite Schenkel an beiden Seiten des Schenkels angeordnete Befestigungsmittel, beispielsweise von beiden Seiten des Schenkels hervorragende Stifte, insbesondere Dorne, Nägel etc. aufweisen. Es ist dabei auch denkbar, dass nur ein Stift vorgesehen ist, der durch den Schenkel hindurchgeführt ist und somit von beiden Seiten des Schenkels hervorragt. Zur Fixierung wird in diesem Fall zunächst der zweite Schenkel an der ersten der beiden Dämmplatten durch Eindrücken des an der einen Seite des Schenkels vorgesehenen Befestigungsmittels in die Dämmplatte befestigt. Anschließend wird die zweite Dämmplatte mit einer ihrer Seiten weitgehend in Anlage mit der mit dem Schenkel befestigten Seite der ersten Dämmplatte gebracht und dabei das von der freien Seite des Schenkels hervorragende Befestigungsmittel in die zweite Dämmplatte eingedrückt. In diesem Fall ist der zweite Schenkel bei befestigten Dämmplatten also zwischen den benachbarten Dämmplatten angeordnet.

Gemäß einer alternativen Ausgestaltung ist es denkbar, dass der zweite Schenkel des gemeinsamen Fixiermittels die zu verklebenden Dämmplatten über die Grenze zwischen den benachbarten Dämmplatten hinweg übergreift.

Dazu können zum Befestigen des zweiten Schenkels an den Dämmplatten zwei Stifte, insbesondere zwei Nägel, durch den zweiten Schenkel hindurch in die beiden Dämmplatten eingedrückt werden. Der zweite Schenkel kann dazu zwei insbesondere entlang seiner Breite geeignet angeordnete Bohrungen aufweisen.

Auch kann der zweite Schenkel zwei Dorne aufweisen, die zum Befestigen des zweiten Schenkels an den beiden Dämmplatten in die Dämmplatten eingedrückt werden. Die Dorne können dabei insbesondere entlang der Breite des zweiten Schenkels angeordnet sein. Die Dorne können wiederum beweglich ausgestaltet sein.

Bei einer Variante des Verfahrens nach Anspruch 1 und des Dämmsystems nach Anspruch 28 können bei einem Verkleben mehrerer Dämmplatten die Dämmplatten auf dem Untergrund mittels zumindest an ihren Längskanten vorgesehenen Verbindungsmitteln miteinander verbunden werden. Dies ist beim Verfahren gemäß Anspruch 3 und beim Dämmsystem gemäß Anspruch 29 immer gegeben. So wird der Aufbau des Wärmedämm-Verbundsystems weiter erleichtert. Außerdem weisen die aufgeklebten Dämmplatten durch die Verbindungsmittel einen besseren Zusammenhalt auf.

Es ist möglich, dass alternativ oder zusätzlich zu den Längskanten auch an den Querkanten Verbindungsmittel vorgesehen sind.

Beim Verfahren nach Anspruch 1 und beim Wärmedämmsystem nach Anspruch 28 können die Dämmplatten grundsätzlich mittels sämtlicher bekannter Verbindungsmittel miteinander verbunden werden, beispielsweise einer Stufenfalz oder einer umlaufenden Nut.

Gemäß einer besonders praxisgemäßen Ausgestaltung des Verfahrens gemäß Anspruch 1 oder des Dämmsystems Gemäß Anspruch 28 können die Dämmplatten mittels einer Verzahnung miteinander verbunden werden. Dazu weisen miteinander zu verbindende Kanten der Dämmplatten als Verbindungsmittel entsprechende Verzahnungsmittel auf. Grundsätzlich kommen dazu sämtliche bekannten Verzahnungsmittel in Frage. So können die Verbindungsmittel beispielsweise mittels einer gezackten, einer gewellten, einer gerillten oder anders ausgebildeten Verzahnung miteinander verbunden werden.

Beim Verfahren gemäß Anspruch 1 oder beim Dämmsystem gemäß Anspruch 28 können die Dämmplatten auch mittels einer Nut- und Federverbindung miteinander verbunden werden. Dies ist beim Verfahren gemäß Anspruch 3 und beim Dämmsystem gemäß Anspruch 29 immer vorgesehen. Dazu weisen miteinander zu verbindende Kanten der Dämmplatten als Verbindungsmittel entsprechend eine Nut bzw. Feder auf. Eine solche Ausgestaltung bewirkt eine besonders sichere Verbindung der Dämmplatten miteinander.

Grundsätzlich ist es möglich, verschiedene Verbindungsmittel miteinander zu kombinieren, wenn dies zweckmäßig erscheint.

Im Folgenden wird die Erfindung anhand eines in einer Zeichnung dargestellten Ausführungsbeispiels näher erläutert. Es zeigen:
Fig. 1 einen Ausschnitt eines schematischen Querschnitts von zwei mit einem Untergrund zu verklebenden Dämmplatten,
Fig. 2 einen Ausschnitt eines schematischen Querschnitts von zwei mit einem Untergrund verklebten Dämmplatten gemäß einer ersten erfindungsgemäßen Ausgestaltung,
Fig. 3 einen Ausschnitt eines schematischen Querschnitts von zwei mit einem Untergrund verklebten Dämmplatten gemäß einer zweiten erfindungsgemäßen Ausgestaltung,
Fig. 4 ein Fixiermittel zur Fixierung der Fig. 2 in perspektivischer Ansicht,
Fig. 5a,b das Fixiermittel der Fig. 4 in modifizierter Ausführung in zwei perspektivischen Ansichten und
Fig. 6 einen Nagel zur Befestigung des Fixiermittels der Fig. 2 bis 4 an einer seitlichen Kante einer Dämmplatte

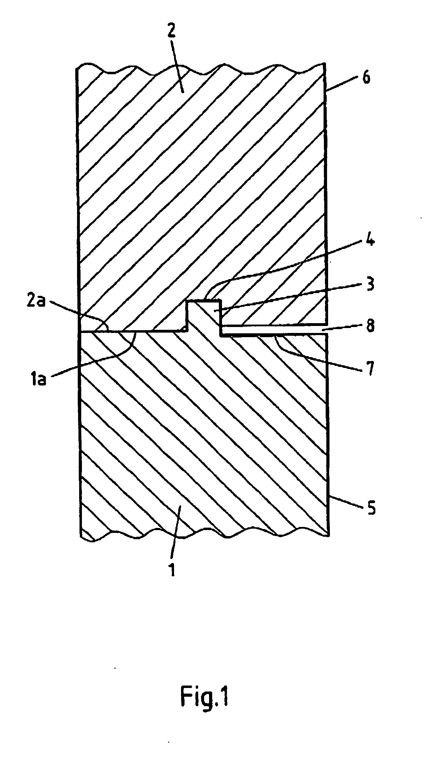

In Figur 1 sind eine erste Dämmplatte 1 und eine zweite Dämmplatte 2 ausschnittsweise in einem Querschnitt gezeigt. Im vorliegenden Fall bestehen die Dämmplatten 1, 2 aus einem Polystyrol-Hartschaum und sind quaderförmig. Als Formate kommen grundsätzlich sämtliche Formate in Frage. Beispielhaft genannt werden Breite zu Länge Verhältnisse von 500 x 1000 mm, 625 x 800 mm, 500 x 500 mm sowie 1000 bzw. 1200 mm x 200 mm. Mögliche Dicken der Dämmplatten liegen typischerweise in einem Bereich von 20 bis 400 mm. Andere Dicken sind jedoch möglich.

Die Dämmplatten 1, 2 weisen in Figur 1 dargestellte seitliche Kanten 1a, 2a, in diesem Fall Längskanten 1a, 2a, und nicht dargestelite kürzere Querkanten auf Die Dämmplatten 1 weist an ihrer Längskante 1a eine Feder 3 auf, die zum Verbinden mit der Dämmplatte 2 in eine entsprechende, an der Längskante 2a der Dämmplatte 2 vorgesehene Nut 4 eingreift. An den nicht dargestellten Querkanten der Dämmplatten 1, 2 sind im vorliegenden Beispiel keine Verbindungsmittel vorgesehen, so dass diese stumpf mit benachbarten Dämmplatten aneinander stoßen können.

Werden quadratische Dämmplatten 1,2 vorgesehen, so können sämtliche Kanten Nut- und Federverbindungsmittel 3, 4 aufweisen. Es ist jedoch auch denkbar, dass keine der Kanten oder nur zwei, insbesondere gegenüberliegende, Kanten derartige Verbindungsmittel aufweisen.

Im vorliegenden Fall verlaufen die Nut 4 und Feder 3 jeweils mittig über die gesamte Länge der Kanten 1a, 2a. Grundsätzlich sind in Anpassung an den Verwendungszweck variable Dimensionen und Positionen der Nuten 4 und Federn 3 möglich. Lediglich beispielsweise genannt werden Abmessungen im Querschnitt rechteckiger Federn von 15 mm oder 12 mm Höhe sowie 15 mm Breite. Die zugehörigen Nuten weisen entsprechende Abmessungen auf.

Die Dämmplatten 1, 2 weisen jeweils eine Fläche 5, 6 auf, die mit einem Untergrund zu verkleben ist. Im vorliegenden Beispiel ist die mit der Feder 3 versehene Längskante 1a der Dämmplatte 1 in ihrem an die Feder 3 anschließenden, der zu verklebenden Fläche 5 zugeordneten Bereich mit einer Vertiefung 7 versehen, die beispielsweise durch Hinterfräsen des Polystyrol-Hartschaums werden kann. Die Vertiefung 7 erstreckt sich in dem vorliegenden Beispiel vollständig über den an die Feder 3 anschließenden, der zu verklebenden Fläche 5 zugeordneten Bereich der Längskante 1a. Bei miteinander verbundenen Dämmplatten 1, 2, wie in Figur 1 dargestellt, besteht im vorliegenden Beispiel somit in dem an die Nut 4 und Feder 3 anschließenden, den zu verklebenden Flächen 5, 6 zugeordneten Bereich der Längskanten 1a, 2a ein Spalt 8 zwischen den Dämmplatten 1, 2. Im vorliegenden Beispiel ist eine Vertiefung 7 von 2 mm Tiefe und somit ein Spalt 8 von etwa 2 mm zwischen den Dämmplatten 1, 2 vorgesehen.

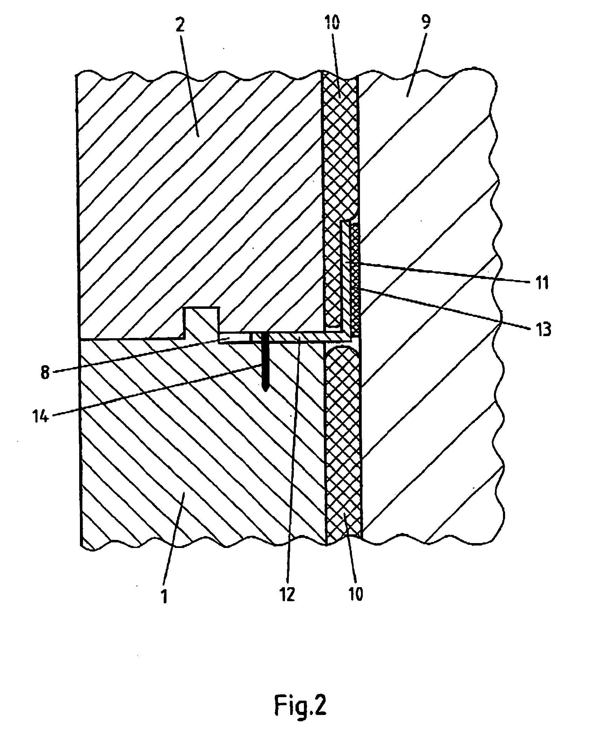

In Figur 2 sind die in Figur 1 dargestellten Dämmplatten 1, 2 im auf einen Untergrund 9 verklebten Zustand dargestellt. Bei dem Untergrund 9 handelt es sich vorliegend um eine vertikale Gebäudeaußenwand. Im Folgenden wird das Verfahren zum Verkleben der Dämmplatten 1, 2 auf dem Untergrund 9 beschrieben.

Zum Verkleben der Dämmplatten 1, 2 auf dem Untergrund 9 wird in dem vorliegenden Beispiel ein schwachexpandierender, einkomponentiger Polyurethanschaum auf Basis Isocyanaturethan-Prepolymer der Baustoffklasse schwer entflammbar B1 nach DIN 4102, Teil 1 verwendet. Der Klebeschaum 10 besitzt im vorliegenden Beispiel eine Rohdichte im geschäumten Zustand von ca. 20 bis 28 kg/m³, eine Wärmeleitfähigkeit von 0,040 W/(m.K) gemäß DIN 52 612 und eine Druckspannung bei 10 % Stauchung von 25 kPa. Ein solcher Klebeschaum 10 ist beispielsweise unter dem Namen Brillux PUR-Füllschaum.3555 verfügbar und weist vorteilhafte Eigenschaften bezüglich Verarbeitbarkeit, Aushärteverhalten sowie Klebe- und Dämmverhalten auf.

Der Polyurethan-Klebeschaum 10 wird im vorliegenden Beispiel von Hand mittels einer Dosierpistole zunächst auf die zu verklebende Fläche 5 der Dämmplatte 1 aufgetragen. Dies kann partiell oder vollflächig erfolgen. Der Klebeschaum 10 wird dazu in komprimierter Form in Metalldosen bereitgestellt. Die Dosen können Größen von beispielsweise 500 ml oder 750 ml aufweisen. Es sind jedoch auch sämtliche anderen Standard oder Sondergrößen denkbar. Die Metalldose weist eine Schraubverbindung auf, die mit einer handelsüblichen Ausbringpistole oder einem Ausbringröhrchen zum Ausbringen des Schaums 10 verbunden wird. Beim Ausströmen des Klebeschaums 10 aus den Dosen expandiert dieser durch Aufschäumen.

Nach dem Auftragen des Klebeschaums 10 auf die zu verklebende Fläche 5 wird die Dämmplatte 1 mit ihrer Fläche 5 mit dem Untergrund 9 in Kontakt gebracht, so dass sich zwischen dem Untergrund 9 und der Fläche 5 der den Kontakt vermittelnde Klebeschaum 10 befindet. Die Schaumstruktur des Klebeschaums 10 wird dabei nicht zerstört. Nach dem in Kontakt bringen verläuft die Längskante 1a der Dämmplatte 1 im Wesentlichen horizontal, und die an der Längskante 1a vorgesehene Feder 3 weist in Richtung des oberen Endes der Gebäudewand.

Unmittelbar anschließend wird mindestens ein Fixiermittel, bestehend aus einem ersten Schenkel 11 und einem zu dem ersten Schenkel 11 rechtwinklig angeordneten zweiten Schenkel 12 an dem Untergrund 9 befestigt. Dazu ist der erste Schenkel 11 auf seiner Außenseite mit einem doppelseitigen Klebeband 13 versehen. Alternativ kann die Außenseite des ersten Schenkels 11 mit einer Schicht eines hochviskosen Klebers, insbesondere eines Gelklebers auf Acrylatbasis versehen sein. Die eine Seite des Klebebands 13 ist auf der Außenseite des Schenkels 11 aufgeklebt, während die andere Seite des Klebebands 13 mit einer Schutzschicht versehen ist. Zur Befestigung des Schenkels 11 an dem Untergrund 9 wird die Schutzschicht von dem Klebeband 13 abgezogen und das Fixiermittel wird mit dem ersten Schenkel 11 oberhalb der Dämmplatte 1 und angrenzend an diese derart auf dem Untergrund 9 angeklebt, dass der zweite Schenkel 12 eine im Wesentlichen horizontale, geringfügig oberhalb der Vertiefung 7 der Dämmplatte 1 verlaufende Auflagefläche bildet.

Die Dämmplatte 1 wird nun für ihre exakte endgültige Positionierung auf dem Untergrund 9 ausgerichtet und mit ihrer Vertiefung 7 mit der Unterseite des zweiten Schenkels 12 in Anlage gebracht. Dabei wird zur Fixierung der Dämmplatte 1 auf dem Untergrund 9 ein Kunststoff- oder Metallnagel 14 in die mit der Vertiefung 7 versehene Längskante 1a der Dämmplatte 1 eingestochen. Auf diese Weise wird verhindert, dass die Dämmplatte 1 aufgrund einer Expansion bzw. Nachexpansion des Kiebeschaums 10 von dem Untergrund 9 abgedrückt wird und somit aus ihrer vorgesehenen Lage bewegt wird. Vielmehr erfolgt eine Nachexpansion des Klebeschaums 10 gegebenenfalls in seitlicher Richtung parallel zum Untergrund 9.

Im vorliegenden Beispiel weisen die Schenkel 11, 12 des Fixiermittels jeweils eine Länge von etwa 40 mm und eine Breite von etwa 20 mm auf. Die Schenkel 11, 12 weisen in Anpassung an die Vertiefung 7 bzw. den Spalt 8 eine Dicke von etwa 2 mm auf. Andere Dimensionen sind jedoch möglich. Das Fixiermittel kann beispielsweise aus Kunststoff oder Metall, insbesondere Leichtmetall, bestehen. Der Nagel 14 kann beispielsweise eine Länge von 25 mm aufweisen.

Anschließend wird die zweite Dämmplatte 2 auf ihrer zu verklebenden Fläche 6 ebenfalls mit Klebeschaum 10 versehen und mit dieser Fläche 6 mit dem Untergrund 9 in Kontakt gebracht. Der zwischen Untergrund 9 und Fläche 6 befindliche Klebeschaum 10 vermittelt wiederum den Kontakt. Dabei wird die an der Platte 1 vorgesehene Feder 3 mit der an der Platte 2 vorgesehenen Nut 4 in Eingriff gebracht. Im Bereich des an dem Untergrund 9 befestigten Schenkels 11 des Fixiermittels wird der Klebeschaum 10 in die angrenzenden Bereiche verdrängt, so dass die äußeren Oberflächen der Platten 1, 2 bündig abschließen. Die Dämmplatte 2 wird durch die Nut- und Federverbindung mit der Dämmplatte 1 in ihrem unteren Bereich lagefest gehalten, so dass eine Expansion bzw. Nachexpansion des Klebeschaums 10 zu keinem Abdrücken der Platte 2 von dem Untergrund 9 in diesem Bereich führen kann. An der nicht dargestellten, der mit der Nut 4 versehenen gegenüberliegenden Längskante der Platte 2 ist mindestens ein zu dem bezüglich der Platte 1 erläuterten Fixiermittel analoges Fixiermittel vorgesehen.

Der zweite Schenkel 12 des Fixiermittels sitzt in dem Spalt 8 zwischen den Dämmplatten 1, 2, so dass trotz des vorgesehenen Fixiermittels ein von der Gebäudeaußenseite gesehen im wesentlichen fugenloses Verkleben der Dämmplatten 1, 2 auf dem Untergrund 9 möglich ist.

Nach dem Aufkleben der Dämmplatten 1, 2 wird der Klebeschaum 10 über eine Trocknungszeit ausgehärtet.

Grundsätzlich ist es möglich, mehrere Fixiermittel an einer Längskante 1a, 2a der Dämmplatten 1, 2 vorzusehen. Es ist auch möglich, zusätzlich oder alternativ an den Querkanten der Dämmplatten 1, 2 entsprechende Fixiermittel anzuordnen. Auch das Anbringen von Fixiermitteln an der Unterseite der Dämmplatten 1, 2 kann zweckmäßig sein. Dabei können jeweils zweckmäßige Vertiefungen für die Fixiermittel vorgesehen sein, bzw. beispielsweise durch Schmelzen oder Schneiden ersteilt werden.

Das Verkleben der Dämmplatten 1, 2 erfolgt bei Wärmedämm-Verbundsystemen an dem Untergrund 9, beispielsweise einer Gebäudewand, in der Regel von unten nach oben. Die unkontrollierte Nachexpansion des Klebeschaums 10 im unteren Bereich der ersten, also untersten Dämmplattenreihe wird durch die Aufkantung der in der Regel dort verbauten Sockelprofile unterbunden. Sofern ohne Sockelprofile gearbeitet wird, können die Dämmplatten 1,2 mit Winkelfixiermitteln oder Dämmstoffklammern oder anderen Fixiermitteln (Nägel, Klammern, Dübel, Schraubzwingen etc.) fixiert werden. Dies gilt auch für die letzte, also oberste Dämmplattenreihe, zum Beispiel am Dachanschluss.

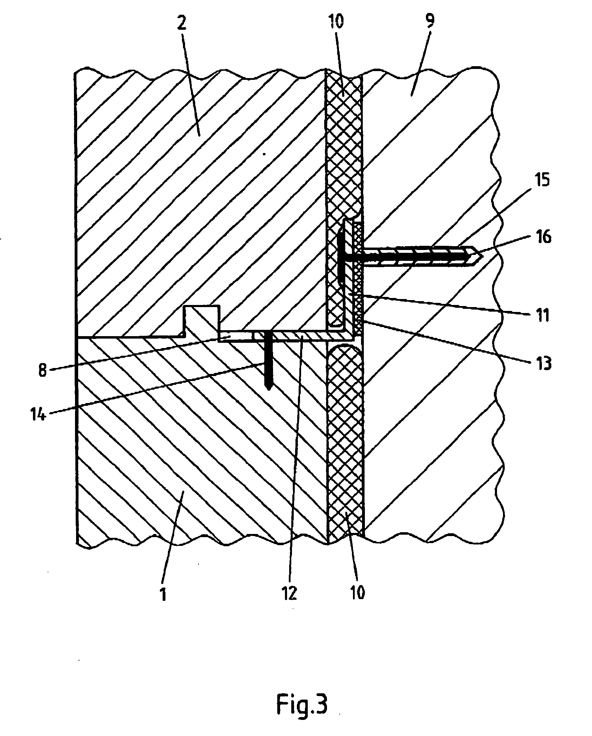

In Figur 3 sind die in Figur 1 dargestellten Dämmplatten 1, 2 im auf einen Untergrund 9 verklebten Zustand gemäß einer anderen Ausgestaltung der Erfindung dargestellt.

Die erste Dämmplatte 1 wird in zu der Ausgestaltung gemäß Figur 2 analoger Weise auf dem Untergrund 9 verklebt. Die Ausgestaltung gemäß Figur 3 unterscheidet sich hinsichtlich des Verklebens der Platten 1, 2 von der in Figur 2 dargestellten Ausgestaltung lediglich in der Ausgestaltung des Fixiermittels. Das Fixiermittel gemäß Figur 3 weist wiederum zwei zueinander rechtwinklig angeordnete Schenkel 11, 12 auf. Gemäß dem in Figur 3 dargestellten Beispiel wird der erste Schenkel 11 in zu der Ausgestaltung gemäß Figur 2 analoger Weise mittels doppelseitigem Klebeband 13 an dem Untergrund 9 befestigt. Zusätzlich ist der erste Schenkel 11 gemäß Figur 3 jedoch mit einer Bohrung versehen. An der der Bohrung bei befestigtem Schenkel 11 zugeordneten Position des Untergrunds 9 ist ein Dübel 15 in den Untergrund 9 eingelassen. Zusätzlich zu dem Befestigen des Schenkels 11 auf dem Untergrund 9 mittels des doppelseitigen Klebebands 13 wird bei der in Figur 3 dargestellten Ausgestaltung der Schenkel 11 mittels eines durch die Bohrung des Schenkels 11 geführten, in den Dübel 15 eingeführten Befestigungsmittels 16, insbesondere eines Nagels, befestigt. Grundsätzlich können als Dübel 16 beispielsweise Spiral-, Steck-, Schraub- oder Schlagdübel eingesetzt werden.

Durch diese Ausgestaltung wird eine besonders hohe Belastbarkeit der Befestigung des ersten Schenkels 11 erreicht. Die Befestigung des zweiten Schenkels 12 an der Dämmplatte 1 und das anschließende Verkleben der Dämmplatte 2 erfolgt wiederum in zu der Ausgestaltung gemäß Figur 2 analoger Weise.

Gemäß allen beschriebenen Ausgestaltungen können eine Vielzahl von Dämmplatten 1,2 mit einem Untergrund 9 verklebt werden, so dass eine vollständige Dämmung beispielsweise einer Gebäudewand erreicht werden kann.

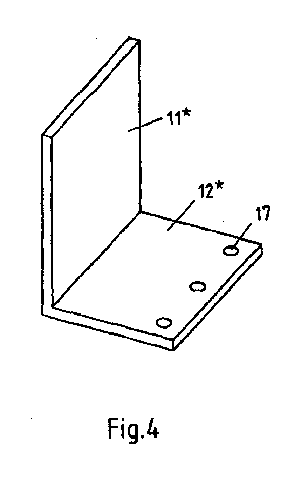

In Fig. 4 ist ein Fixiermittel zur Fixierung einer Dämmplatte auf dem Untergrund, wie es in ähnlicher Form bereits in den Fig. 2 und 3 gezeigt ist, in gesonderter perspektivischer Ansicht dargestellt. Es umfasst wieder um einen ersten Schenkel 11*, über welchen es am Untergrund befestigt wird, und einen zweiten Schenkel 12*, welcher mit einer Längskante der Dämmplatte verbunden wird. Der zweite Schenkel 12* umfasst drei in einer Reihe parallel zur Außenkante des Schenkels 12* Löcher 17, durch welche Nägel, welche, wie in den Fig. 2 und 3 dargestellt, in eine Längskante der Dämmplatte eingestochen werden, gesteckt sind.

Das Fixiermittel gemäß Fig. 4 weist einen ca. 45 mm langen ersten Schenkel 11* und einen ca. 30 mm langen zweiten Schenkel 12* auf. Die Breite der Schenkel 11*, 12* beträgt jeweils ca. 40 mm.

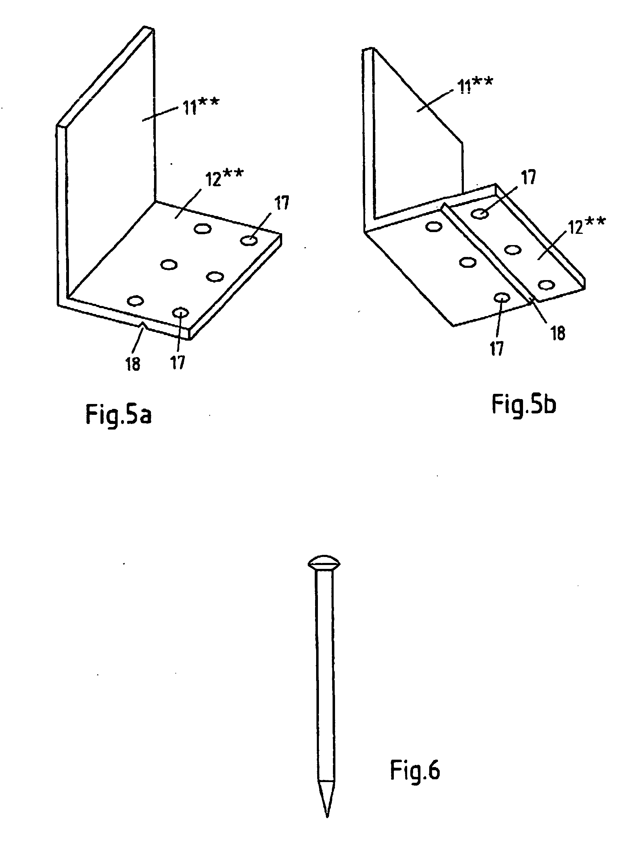

In Fig. 6 ist ein Nagel dargestellt, welcher durch die Löcher 17 durchgesteckt und in die Dämmplatte an deren Längskante eingestochen werden kann. Dieser hat eine Länge von vorzugsweise ca. 60 mm. Der Nagel weist einen ellipsenförmigen Kopf auf, so dass er bei Bedarf leicht aus der Dämmplatte wieder entfernt werden kann. Zweckmäßigerweise sind der Nagel sowie das Fixiermittel aus dem gleichen Werkstoff, insbesondere einem Kunststoff, hergestellt.

Das in den Fig. Sa und 5b dargestellte Fixierelement umfasst in seinem zweiten Schenkel 12** zwei parallel angeordnete durch jeweils drei Löcher gebildete Lochreihen. Zwischen den Lochreihen ist eine Sollbruchkante 18 in den zweiten Schenkel 12** des Fixierelements eingeformt. Bei einer sehr dünnen Dämmplatte mit in den Längskanten vorgesehener Nut bzw. Feder kann somit der zweite Schenkel 12** in sehr einfacher Weise durch Abbrechen des äußeren Teils des Schenkels 12** derart verkürzt werden, dass dieser im fixierten Zustand der Dämmplatte nicht die Nut ganz oder teilweise abdeckt bzw. mit der Feder kollidiert. Es versteht sich, dass auf dem zweiten Schenkel 12** auch mehrere Sollbruchkanten vorgesehen sein können.

Nicht dargestellt ist ein weiteres Fixierelement, welches eine weitere Sollbruchkante unmittelbar an der Berührungskante der beiden Schenkel aufweist. Bei einem derart ausgestalteten Fixierungselement kann nach hinreichender Aushärtung des Klebers und Entfernung des oder der Nägel der gesamte zweite Schenkel abgebrochen werden, so dass beispielsweise unterhalb der Dämmplatte ein Tropfkantenprofil und/oder andersgeartete Dämmplatten, insbesondere Sockel- und Perimeterdämmplatten, angebracht werden können.

## Patentansprüche

1. Verfahren zum Anbringen von mindestens einer Dämmplatte (1,2) an einen Untergrund (9), umfassend die folgenden Schritte:
- Bereitstellen eines Klebemittels in Form eines Klebeschaums (10),
- Aufbringen des Klebemittels auf eine zu verklebende Fläche (5,6) der Dämmplatte (1,2) und/oder auf den mit der Dämmplatte (1,2) zu verklebenden Untergrund (9),
- in Kontakt bringen der zu verklebenden Fläche (5,6) der Dämmplatte (1,2) mit dem Untergrund (9),
- Aushärten des zwischen der Dämmplatte (1,2) und dem Untergrund (9) befindlichen Klebemittels,
- Fixieren der zu verklebenden Dämmplatte (1,2) durch mindestens ein zusätzlich zu dem Klebeschaum (10) vorgesehenes Fixiermittel (11) auf dem Untergrund (9),
- wobei das Fixiermittel zwei winklig, insbesondere rechtwinklig, zueinander angeordnete Schenkel (11,12) aufweist, wobei zum Fixieren der Dämmplatte (1,2) der erste Schenkel (11) an dem Untergrund (9) befestigt wird und der zweite Schenkel (12) an der Dämmplatte (1,2) befestigt wird
und
- wobei der zweite Schenkel (12) an einer seitlichen Kante (1a,2a) der Dämmplatte (1,2) befestigt wird,
**dadurch gekennzeichnet, dass**
zum Befestigen des zweiten Schenkels (12) an der Dämmplatte (1,2) ein Stift, insbesondere ein Nagel (14), durch den zweiten Schenkel (12) hindurch in die Dämmplatte (1,2) eingedrückt wird.

2. Verfahren nach Anspruch 1, **dadurch gekennzeichnet, dass** der Klebeschaum (10) vor dem in Kontakt bringen der zu verklebenden Fläche (5,6) der Dämmplatte (1,2) mit dem Untergrund (9) auf eine zu verklebende Fläche (5,6) der Dämmplatte (1,2) und/oder auf den mit der Dämmplatte (1,2) zu verklebenden Untergrund (9) aufgebracht wird.

3. Verfahren zum Anbringen von mindestens einer Dämmplatte (1,2) an einen Untergrund (9), umfassend die folgenden Schritte:
- Bereitstellen eines Klebemittels in Form eines Klebeschaum (10),
- Aufbringen des Klebemittels auf eine zu verklebende Fläche (5,6) der Dämmplatte (1,2) und/oder auf den mit der Dämmplatte (1,2) zu verklebenden Untergrund (9),
- in Kontaktbringen der zu verklebenden Fläche (5,6) der Dämmplatte (1,2) mit dem Untergrund (9),
- Aushärten des zwischen der Dämmplatte (1,2) und dem Untergrund (9) befindlichen Klebemittels,
- Fixieren der zu verklebenden Dämmplatte (1,2) durch mindestens ein zusätzlich zu dem Klebeschaum (10) vorgesehenes Fixiermittel (11) auf dem Untergrund (9),
- wobei das Fixiermittel zwei winklig, insbesondere rechtwinklig, zueinander angeordnete Schenkel (11,12) aufweist,
und
- wobei zum Fixieren der Dämmplatte (1,2) der erste Schenkel (11) an dem Untergrund (9) befestigt wird und der zweite Schenkel (12) an der Dämmplatte (1,2) befestigt wird,
**dadurch gekennzeichnet,**
- **dass** der Klebeschaum (10) vor dem in Kontakt bringen der zu verklebenden Fläche (5,6) der Dämmplatte (1,2) mit dem Untergrund (9) auf eine zu verklebende Fläche (5,6) der Dämmplatte (1,2) und/oder auf den mit der Dämmplatte (1,2) zu verklebenden Untergrund (9) aufgebracht wird,
- **dass** der zweite Schenkel (12) einen Dorn aufweist, der zum Befestigen des zweiten Schenkels (12) an der Dämmplatte (1,2) in die Dämmplatte (1,2) eingedrückt wird,
- **dass** mehrere Dämmplatten (1,2) mit dem Untergrund (9) verklebt werden,
- **dass** die Dämmplatten (1,2) auf dem Untergrund (9) mittels zumindest an ihren Längskanten (1a,2a) vorgesehenen Verbindungsmitteln (3,4) miteinander verbunden werden,
und
- **dass** die Dämmplatten (1,2) mittels einer Nut- und Federverbindung miteinander verbunden werden.

4. Verfahren nach einem der voranstehenden Ansprüche, **dadurch gekennzeichnet, dass** der Klebeschaum (10) in komprimierter Form bereitgestellt wird.

5. Verfahren nach einem der voranstehenden Ansprüche, **dadurch gekennzeichnet, dass** als Klebeschaum (10) ein schwachexpandierender Klebeschaum mit einer maximalen Schaumexpansion, von 1 bis 30 %, insbesondere von 5 bis 20 %, speziell 8 bis 15 % verwendet wird.

6. Verfahren nach einem der Ansprüche 1 bis 5, **dadurch gekennzeichnet, dass** als Klebeschaum (10) ein teilkollabierender Klebeschaum verwendet wird.

7. Verfahren nach Anspruch 6, **dadurch gekennzeichnet, dass** die Volumenreduktion des teilkollabierenden Klebeschaums 1 bis 30 %, vorzugsweise 5 bis 20 % und speziell 7 bis 15 % beträgt.

8. Verfahren nach Anspruch 6 oder 7, **dadurch gekennzeichnet, dass** die Volumenreduktion des teilkollabierenden Klebeschaums innerhalb von 1 bis 30 s, vorzugsweise 3 bis 20 s, speziell 5 bis 10 s erfolgt.

9. Verfahren nach einem der voranstehenden Ansprüche, **dadurch gekennzeichnet, dass** der Klebeschaum (10) über eine Trocknungszeit ausgehärtet wird.

10. Verfahren nach einem der voranstehenden Ansprüche, **dadurch gekennzeichnet, dass** der Klebeschaum (10) durch UV-Bestrahlung ausgehärtet wird.

11. Verfahren nach einem der voranstehenden Ansprüche, **dadurch gekennzeichnet, dass** ein organischer Klebeschaum (10) eingesetzt wird.

12. Verfahren nach Anspruch 11, **dadurch gekennzeichnet, dass** ein Klebeschaum (10) auf Basis von Polyurethan eingesetzt wird.

13. Verfahren nach einem der voranstehenden Ansprüche, **dadurch gekennzeichnet, dass** der Klebeschaum eine Wärmeleitfähigkeit in einem Bereich von 0,020 bis 0,060 W/(m·K) aufweist.

14. Verfahren nach einem der voranstehenden Ansprüche, **dadurch gekennzeichnet, dass** der Klebeschaum eine Druckspannung bei 10% Stauchung in einem Bereich von 3 bis 500 kPa aufweist.

15. Verfahren nach einem der voranstehenden Ansprüche, **dadurch gekennzeichnet, dass** der Klebeschaum im geschäumten Zustand eine Rohdichte in einem Bereich von 10 bis 300 kg/m³ aufweist.

16. Verfahren nach einem der voranstehenden Ansprüche, **dadurch gekennzeichnet, dass** die jeweils zu verklebende Dämmplatte (1,2) durch das mindestens eine Fixiermittel temporär auf dem Untergrund (9) fixiert wird.

17. Verfahren nach einem der Ansprüche 1 bis 16, **dadurch gekennzeichnet, dass** der erste Schenkel (11) mittels eines Klebemittels an dem Untergrund (9) befestigt wird.

18. Verfahren nach Anspruch 17, **dadurch gekennzeichnet, dass** das Klebemittel als doppelseitig klebendes Klebeband (13) ausgebildet ist.

19. Verfahren nach Anspruch 17, **dadurch gekennzeichnet, dass** das Klebemittel als hochviskoser Klebstoff, insbesondere als Gelkleber, ausgebildet ist.

20. Verfahren nach einem der Ansprüche 1 bis 19, **dadurch gekennzeichnet, dass** der erste Schenkel (11) mittels einer mechanischen Verankerung an dem Untergrund (9) befestigt wird.

21. Verfahren nach Anspruch 1, **dadurch gekennzeichnet, dass** der Stift, insbesondere der Nagel (14) einen elliptischen Kopf aufweist.

22. Verfahren nach Anspruch 1, **dadurch gekennzeichnet, dass** in der mit dem zweiten Schenkel (12) zu befestigenden seitlichen Kante (1a,2a) der Dämmplatte (1,2) eine Vertiefung (7) für den zweiten Schenkel (12) vorgesehen wird.

23. Verfahren nach einem der Ansprüche 1 bis 22, **dadurch gekennzeichnet, dass** der zweite Schenkel (12**) wenigstens eine im Wesentlichen parallel zur Außenkante des Schenkels (12**) verlaufende Sollbruchkante aufweist.

24. Verfahren nach Anspruch 1, **dadurch gekennzeichnet, dass** mehrere Dämmplatten (1,2) mit dem Untergrund (9) verklebt werden.

25. Verfahren nach Anspruch 3 oder 24, **dadurch gekennzeichnet, dass** jeweils zwei zu verklebende Dämmplatten (1,2) durch mindestens ein gemeinsames Fixiermittel auf dem Untergrund (9) fixiert werden.

26. Verfahren nach Anspruch 24 oder 25, **dadurch gekennzeichnet, dass** die Dämmplatten (1,2) auf dem Untergrund (9) mittels zumindest an ihren Längskanten (1a,2a) vorgesehenen Verbindungsmitteln (3,4) miteinander verbunden werden.

27. Verfahren nach Anspruch 26, **dadurch gekennzeichnet, dass** die Dämmplatten (1,2) mittels einer Verzahnung miteinander verbunden werden.

28. Dämmsystem, insbesondere zur Wärmedämmung von Gebäuden, mit mindestens einer mittels eines Klebeschaums auf dem Untergrund (9) verklebten Dämmplatte (1,2), wobei die mindestens eine Dämmplatte (1, 2) durch mindestens ein zusätzlich zu dem Klebeschaum (10) vorgesehenes Fixiermittel (11) in der gewünschten Position auf dem Untergrund (9) fixiert ist,
- wobei das Fixiermittel zwei winklig, insbesondere rechtwinklig, zueinander angeordnete Schenkel (11,12) aufweist, wobei zum Fixieren der Dämmplatte (1,2) der erste Schenkel (11) an dem Untergrund (9) befestigt ist, und der zweite Schenkel (12) an der Dämmplatte (1,2) befestigt ist und
- wobei der zweite Schenkel (12) an einer seitlichen Kante (1a,2a) der Dämmplatte (1,2) befestigt ist,
**dadurch gekennzeichnet, dass**
zum Befestigen des zweiten Schenkels (12) an der Dämmplatte (1,2) ein Stift, insbesondere ein Nagel (14), durch den zweiten Schenkel (12) hindurch in die Dämmplatte (1,2) eingedrückt ist.

29. Dämmsystem, insbesondere zur Wärmedämmung von Gebäuden, mit mindestens einer mittels eines Klebeschaums auf dem Untergrund (9) verklebten Dämmplatte (1,2),
- wobei die mindestens eine Dämmplatte (1, 2) durch mindestens ein zusätzlich zu dem Klebeschaum (10) vorgesehenes Fixiermittel (11) in der gewünschten Position auf dem Untergrund (9) fixiert ist,
- wobei das Fixiermittel zwei winklig, insbesondere rechtwinklig, zueinander angeordnete Schenkel (11,12) aufweist,
- wobei zum Fixieren der Dämmplatte (1,2) der erste Schenkel (11) an dem Untergrund (9) befestigt ist, und der zweite Schenkel (12) an der Dämmplatte (1,2) befestigt ist,
- wobei der zweite Schenkel (12) einen Dorn aufweist, der zum Befestigen des zweiten Schenkels (12) an der Dämmplatte (1,2) in die Dämmplatte (1,2) eingedrückt ist,
- wobei mehrere Dämmplatten (1,2) mit dem Untergrund (9) verklebt sind,
und
- wobei die Dämmplatten (1,2) mittels einer Nut- und Federverbindung miteinander verbunden sind.

30. Dämmsystem nach Anspruch 28 oder 29, **dadurch gekennzeichnet, dass** der erste Schenkel (11) mittels eines Klebemittels an dem Untergrund (9) befestigt ist.

31. Dammsystem nach Anspruch 28 bis 30, **dadurch gekennzeichnet, dass** der Klebeschaum nach einem der Ansprüche 4 bis 15 ausgebildet ist.

32. Dämmsystem nach einem der Ansprüche 28 bis 31, **dadurch gekennzeichnet, dass** der erste Schenkel (11) mittels eines durch eine Bohrung des Schenkels (11) geführten, in einen in den Untergrund (9) eingelassenen Dübel (15) eingeführten Befestigungsmittels (16), insbesondere eines Nagels, an dem Untergrund (9) befestigt ist.

33. Dämmsystem nach Anspruch 28, **dadurch gekennzeichnet, dass** in der mit dem zweiten Schenkel (12) zu befestigenden seitlichen Kante (1a,2a) der Dämmplatte (1,2) eine Vertiefung (7) für den zweiten Schenkel (12) vorgesehen ist.

34. Dämmsystem nach Anspruch 28, **dadurch gekennzeichnet, dass** der zweite Schenkel (12**) wenigstens eine im Wesentlichen parallel zur Außenkante des Schenkels (12**) verlaufende Sollbruchkante gemäß Anspruch 23 aufweist.

## Claims

1. A method for mounting at least one insulation panel (1, 2) to a base (9), comprising the following steps:
- providing an adhesive in the form of an adhesive foam (10),
- applying the adhesive to a gluing surface (5, 6) of the insulation panel (1, 2) and/or to the base (9) to be glued with the insulation panel (1, 2),
- contacting the gluing surface (5, 6) of the insulation panel (1, 2) with the base (9),
- curing the adhesive located between the insulation panel (1, 2) and the base (9),
- fixing the insulation panel (1, 2) on the base (9) by at least one fixing means (11) provided in addition to the adhesive foam (10),
- wherein the fixing means has two legs (11, 12) arranged at an angle, in particular at right angles relative to each other, the first leg (11) being attached to the base (9) and the second leg (12) being attached to the insulation panel (1, 2) for fixing the insulation panel (1, 2)
and
- wherein the second leg (12) is attached to a lateral edge (1a, 2a) of the insulation panel (1, 2)
**characterized in that**
a pin, in particular a nail (14) is pressed through the second leg (12) into the insulation panel (1, 2) for attaching the second leg (12) to the insulation panel (1, 2).

2. A method as claimed in claim 1,
**characterized in that**
the adhesive foam (10) is applied to a gluing surface (5, 6) of the insulation panel (1, 2) and/or to the base (9) to be glued with the insulation panel (1, 2) before contacting the gluing surface (5, 6) of the insulation panel (1, 2) with the base (9).

3. A method for mounting at least one insulation panel (1, 2) to a base (9), comprising the following steps:
- providing an adhesive in the form of an adhesive foam (10),
- applying the adhesive to a gluing surface (5, 6) of the insulation panel (1, 2) and/or to the base (9) to be glued with the insulation panel (1, 2),
- contacting the gluing surface (5, 6) of the insulation panel (1, 2) with the base (9),
- curing the adhesive located between the insulation panel (1, 2) and the base (9),
- fixing the insulation panel (1, 2) on the base (9) by at least one fixing means (11) provided in addition to the adhesive foam (10),
- wherein the fixing means has two legs (11, 12) arranged at an angle, in particular at right angles relative to each other,
and
- wherein the first leg (11) is attached to the base (9) and the second leg (12) is attached to the insulation panel (1, 2) for fixing the insulation panel (1, 2),
**characterized in that**
- the adhesive foam (10) is applied to a gluing surface (5, 6) of the insulation panel (1, 2) and/or to the base (9) to be glued with the insulation panel (1, 2) before contacting the gluing surface (5, 6) of the insulation panel (1, 2) with the base (9),
- the second leg (12) has a spike which is pressed into the insulation panel (1, 2) for attaching the second leg to the insulation panel (1, 2)
- a plurality of insulation panels (1, 2) are glued to the base (9),
- the insulation panels (1, 2) are joined on the base (9) by means of joining means (3, 4) provided at least at their longitudinal edges (1a, 2a),
and
- the insulation panels (1, 2) are joined by means of a groove and tongue joint.

4. A method as claimed in one of the foregoing claims,
**characterized in that**
the adhesive foam (10) is provided in compressed form.

5. A method as claimed in one of the foregoing claims,
**characterized in that**
a slightly expanding adhesive foam having a maximum foam expansion of 1 to 30%, particularly of 5 to 20%, more particularly of 8 to 15% is used as adhesive foam (10).

6. A method as claimed in claims 1 to 5,
**characterized in that**
a partially collapsing adhesive foam is used as adhesive foam (10).

7. A method as claimed in claim 6,
**characterized in that**
the reduction in volume of the partially collapsing adhesive foam is 1 to 30%, preferably 5 to 20%, more particularly 7 to 15%.

8. A method as claimed in claim 6 or 7,
**characterized in that**
the reduction in volume of the partially collapsing adhesive foam occurs within 1 to 30 s, preferably 3 to 20 s, more particularly 5 to 10 s.

9. A method as claimed in one of the foregoing claims,
**characterized in that**
the adhesive foam (10) is cured during a drying period.

10. A method as claimed in one of the foregoing claims,
**characterized in that**
the adhesive foam (10) is cured by means of UV radiation.

11. A method as claimed in one of the foregoing claims,
**characterized in that**
an organic adhesive foam (10) is used.

12. A method as claimed in claim 12,
**characterized in that**
an adhesive foam (10) based on polyurethane is used.

13. A method as claimed in one of the foregoing claims,
**characterized in that**
the adhesive foam has a caloric conductibility in an area of 0,020 to 0,060 W/(m·K).

14. A method as claimed in one of the foregoing claims,
**characterized in that**
the adhesive foam has a compressive strain of 3 to 500 kPa at a compression of 10%.

15. A method as claimed in one of the foregoing claims,
**characterized in that**
the adhesive foam has an apparent density in an area of 10 to 300 kg/m³ in its foamed condition.

16. A method as claimed in one of the foregoing claims,
**characterized in that**
each of the insulation panels (1, 2) to be glued are fixed temporarily to the base (9) by the at least one fixing means.

17. A method as claimed in one of claims 1 to 16,
**characterized in that**
the first leg (11) is attached to the base (9) by means of an adhesive means.

18. A method as claimed in claim 17,
**characterized in that**
the adhesive means is in the form of a double-sided adhesive tape (13).

19. A method as claimed in claim 17,
**characterized in that**
the adhesive means is in the form of a highly viscous adhesive, particularly an adhesive gel.

20. A method as claimed in one of claims 1 to 19,
**characterized in that**
the first leg (11) is attached to the base (9) by means of a mechanic anchorage.

21. A method as claimed in claim 1,
**characterized in that**
the pin, in particular the nail (14) has an elliptic head.

22. A method as claimed in claim 1,
**characterized in that**
a recess (7) for the second leg (12) is provided in the lateral edge (1a, 2a) of the insulation panel (1, 2) to be attached by means of the second leg (12).

23. A method as claimed in one of claims 1 to 22,
**characterized in that**
the second leg (12**) has at least one break-off edge extending substantially parallel to the outer edge of the leg (12**).

24. A method as claimed in claim 1,
**characterized in that**
a plurality of insulation panels (1, 2) are glued to the base (9).

25. A method as claimed in claim 3 or 24,
**characterized in that**
each two of the insulation panels (1, 2) to be glued are fixed to the base (9) by means of at least one common fixing means.

26. A method as claimed in one of claims 24 or 25,
**characterized in that**
the insulation panels (1, 2) are joined on the base (9) by means of joining means (3, 4) provided at least at their longitudinal edges (1a, 2a).

27. A method as claimed in claim 26,
**characterized in that**
the insulation panels (1, 2) are joined by means of indenting.

28. Insulation system, in particular for thermal insulation of buildings, comprising at least one insulation panel (1, 2) glued to the base (9) by means of an adhesive foam, the at least one insulation panel (1, 2) being fixed on the base (9) in a desired position by means of at least one fixing means (11) provided in addition to the adhesive foam (10),
- wherein the fixing means has two legs (11, 12) arranged at an angle, in particular at right angles relative to each other, the first leg (11) being attached to the base (9) and the second leg (12) being attached to the insulation panel (1, 2) for fixing the insulation panel (1, 2), and
- wherein the second leg (12) is attached to a lateral edge (1a, 2a) of the insulation panel (1, 2),
**characterized in that**
a pin, in particular a nail (14) is pressed through the second leg (12) into the insulation panel (1, 2) for attaching the second leg (12) to the insulation panel (1, 2).

29. Insulation system, in particular for thermal insulation of buildings, comprising at least one insulation panel (1, 2) glued to the base (9) by means of an adhesive foam,
- wherein the at least one insulation panel (1, 2) is fixed on the base (9) in a desired position by means of at least one fixing means (11) provided in addition to the adhesive foam (10),
- wherein the fixing means has two legs (11, 12) arranged at an angle, in particular at right angles relative to each other,
- wherein the first leg (11) is attached to the base (9) and the second leg (12) is attached to the insulation panel (1, 2) for fixing the insulation panel (1, 2),
- wherein the second leg (12) has a spike which is pressed into the insulation panel (1, 2) for attaching the second leg to the insulation panel (1, 2),
- wherein a plurality of insulation panels (1, 2) are glued to the base (9),
and
- wherein the insulation panels (1, 2) are joined by means of a groove and tongue joint.

30. Insulation system as claimed in claim 28 or 29,
**characterized in that**
the first leg (11) is attached to the base (9) by means of an adhesive means.

31. Insulation system as claimed in claim 28 to 30,
**characterized in that**
the adhesive foam is in a form according to one of claims 4 to 15.

32. Insulation system as claimed in claim 28 to 31,
**characterized in that**
the first leg (11) is attached to the base (9) by means of a fastening means (16), in particular a nail inserted through a boring of the leg (11) and introduced into a dowel (15) embedded in the base (9).

33. Insulation system as claimed in claim 28,
**characterized in that**
a recess (7) for the second leg (12) is provided in the lateral edge (1a, 2a) of the insulation panel (1, 2) to be attached by means of the second leg (12).

34. Insulation system as claimed in claim 28,
**characterized in that**
the second leg (12**) has at least one break-off edge extending substantially parallel to the outer edge of the leg (12**) according to claim 23.

## Revendications

1. Procédé d'installation d'au moins une plaque isolante (1, 2) sur une base (9), lequel procédé comprend les étapes qui consistent à :
- préparer un adhésif sous forme d'une mousse adhésive (10),
- appliquer l'adhésif sur une surface (5, 6) de collage de la plaque isolante (1, 2) et/ou sur la base (9) sur laquelle la plaque isolante (1, 2) doit être collée,
- mettre en contact la surface (5, 6) de collage de la plaque isolante (1, 2) avec la base (9),
- laisser durcir l'adhésif situé entre la plaque isolante (1, 2) et la base (9),
- par au moins un moyen de fixation (11) prévu en plus de la mousse adhésive (10), fixer sur la base (9) la plaque isolante (1, 2) à coller,
- sachant que le moyen de fixation présente deux ailes (11, 12) coudées l'une par rapport à l'autre et en particulier coudées à angle droit, la première aile (11) étant fixée sur la base (9) pour fixer la plaque isolante (1, 2) et la deuxième aile (12) étant fixée sur la plaque isolante (1, 2),
et
- sachant que la deuxième aile (12) est fixée sur un bord latéral (1a, 2a) de la plaque isolante (1, 2),
**caractérisé en ce que,** pour fixer la deuxième aile (12) sur la plaque isolante (1, 2), on enfonce, dans la plaque isolante (1, 2), une tige, en particulier un clou (14), qui passe à travers la deuxième aile (12),

2. Procédé selon la revendication 1,
**caractérisé en ce que** la mousse adhésive (10), avant que la surface de collage (5, 6) de la plaque isolante (1, 2) soit mise en contact avec la base (9), est appliquée sur une surface de collage (5, 6) de la plaque isolante (1, 2) et / ou sur la base (9) sur laquelle la plaque isolante (1, 2) doit être collée.

3. Procédé d'installation d'au moins une plaque isolante (1, 2) sur une base (9), lequel procédé comprend les étapes qui consistent à :
- préparer un adhésif sous forme d'une mousse adhésive (10),
- appliquer l'adhésif sur une surface (5, 6) de collage de la plaque isolante (1, 2) et / ou sur la base (9) sur laquelle la plaque isolante (1, 2) doit être collée,
- mettre en contact la surface (5, 6) de collage de la plaque isolante (1, 2) avec la base (9),
- laisser durcir l'adhésif situé entre la plaque isolante (1, 2) et la base (9),
- par au moins un moyen de fixation (11) prévu en plus de la mousse adhésive (10), fixer sur la base (9) la plaque isolante (1, 2) à coller,
- sachant que le moyen de fixation présente deux ailes (11, 12) coudées l'une par rapport à l'autre et en particulier coudées à angle droit,
et
- sachant que, pour fixer la plaque isolante (1, 2), la première aile (11) est fixée sur la base (9) et la deuxième aile (12) est fixée sur la plaque isolante (1, 2),
**caractérisé en ce que**
- la mousse adhésive (10), avant que la surface de collage (5, 6) de la plaque isolante (1, 2) soit mise en contact avec la base (9), est appliquée sur une surface de collage (5, 6) de la plaque isolante (1, 2) et / ou sur la base (9) sur laquelle la plaque isolante (1, 2) doit être collée,
- la deuxième aile (12) est dotée d'un ergot, qui, pour la fixation de ladite deuxième aile (12) sur la plaque isolante (1, 2), est enfoncé dans ladite plaque isolante (1, 2),
- plusieurs plaques isolantes (1, 2) sont collées sur la base (9),
- les plaques isolantes (1, 2) sont liées ensemble sur la base (9) avec des moyens de fixation (3, 4) qui sont prévus au moins sur leurs bords longitudinaux (1a, 2a),
et
- que les plaques isolantes (1, 2) les plaques isolantes (1, 2) sont reliées l'une à l'autre au moyen d'une liaison à rainures et languettes.

4. Procédé selon l'une des revendications précédentes, **caractérisé en ce que** la mousse adhésive (10) est préparée sous forme comprimée.

5. Procédé selon l'une des revendications précédentes, **caractérisé en ce que**, comme mousse adhésive (10), on utilise une mousse adhésive peu expansible dont l'expansion maximale est de 1 à 30 %, en particulier de 5 à 20 % et spécialement de 8 à 15 %.

6. Procédé selon l'une des revendications 1 à 5, **caractérisé en ce que**, comme mousse adhésive (10), on utilise une mousse adhésive partiellement écrasable.

7. Procédé selon la revendication 6, **caractérisé en ce que** la réduction de volume de la mousse adhésive partiellement écrasable est comprise entre 1 et 30 %, de préférence entre 5 et 20 % et spécialement entre 7 et 15 %.

8. Procédé selon revendication 6 ou 7, **caractérisé en ce que** la réduction de volume de la mousse adhésive partiellement écrasable s'effectue en 1 à 30 s, de préférence en 3 à 20 s et spécialement en 5 à 10 s.

9. Procédé selon l'une des revendications précédentes, **caractérisé en ce que** la mousse adhésive (10) est durcie pendant une durée de séchage.

10. Procédé selon l'une des revendications précédentes, **caractérisé en ce que** la mousse adhésive (10) est durcie par irradiation aux UV.

11. Procédé selon l'une des revendications précédentes, **caractérisé en ce que** l'on utilise une mousse adhésive (10) organique.

12. Procédé selon la revendication 11, **caractérisé en ce que** l'on utilise une mousse adhésive (10) à base de polyuréthane.

13. Procédé selon l'une des revendications précédentes, **caractérisé en ce que** la mousse adhésive a une conductivité calorifique comprise dans une plage de 0,020 à 0,060 W/(m.K).

14. Procédé selon l'une des revendications précédentes, **caractérisé en ce que** la mousse adhésive présente une tension de compression de l'ordre de 3 à 500 kPa pour un écrasement de 10 %.

15. Procédé selon l'une des revendications précédentes, **caractérisé en ce que** la mousse adhésive présente à l'état moussé une masse spécifique brute comprise dans une plage de 10 à 300 kg/m³.

16. Procédé selon l'une des revendications précédentes, **caractérisé en ce que** la plaque isolante (1, 2) particulière à coller est fixée temporairement sur la base (9) par le moyen de fixation au moins prévu.

17. Procédé selon l'une des revendications 1 à 16, **caractérisé en ce que** la première aile (11) est fixée sur la base (9) au moyen d'un adhésif.

18. Procédé selon la revendication 17, **caractérisé en ce que** l'adhésif est configuré comme ruban adhésif double face (13).

19. Procédé selon la revendication 17, **caractérisé en ce que** l'adhésif est configuré comme adhésif à haute viscosité, en particulier comme adhésif gélifié.

20. Procédé selon l'une des revendications 1 à 19, **caractérisé en ce que** la première aile (11) est fixée sur la base (9) au moyen d'un ancrage mécanique.

21. Procédé selon la revendication 1, **caractérisé en ce que** la tige, en particulier le clou (14), est doté d'une tête elliptique.

22. Procédé selon la revendication 1, **caractérisé en ce que**, dans le bord latéral (1a, 2a) de la plaque isolante (1, 2) qui doit être fixé avec la deuxième aile (12), un creux (7) est prévu pour la deuxième aile (12).

23. Procédé selon l'une des revendications 1 à 22, **caractérisé en ce que** la deuxième aile (12**) est dotée d'au moins un bord destiné à la rupture préférentielle qui s'étend essentiellement parallèlement au bord extérieur de l'aile (12**).

24. Procédé selon la revendication 1, **caractérisé en ce que** plusieurs plaques isolantes (1, 2) sont collées sur la base (9)

25. Procédé selon revendication 3 ou 24, **caractérisé en ce que** deux plaques isolantes (1, 2) à coller sont fixées sur la base (9) par au moins un moyen de fixation commun.

26. Procédé selon revendication 24 ou 25, **caractérisé en ce que** les plaque isolante (1, 2) sont reliées ensemble sur la base (9) à l'aide de moyens de liaison (3, 4) prévus au moins sur leurs bords longitudinaux (1a, 2a).

27. Procédé selon la revendication 26, **caractérisé en ce que** les plaques isolantes (1, 2) sont reliées ensemble par une denture.

28. Système d'isolation, en particulier pour l'isolation thermique de bâtiments, qui présente au moins une plaque isolante (1, 2) collée sur la base (9) au moyen d'une mousse adhésive, sachant que la plaque isolante (1, 2) au moins prévue est fixées en position souhaitée sur la base (9) par au moins un moyen de fixation (11) prévu en plus de la mousse adhésive (10),
- sachant que le moyen de fixation présente deux ailes (11, 12) coudées l'une par rapport à l'autre et en particulier coudées à angle droit, sachant que pour fixer la plaque isolante (1, 2), la première aile (11) est fixée sur la base (9) et la deuxième aile (12) est fixée sur la plaque isolante (1, 2),
- sachant que la deuxième aile (12) est fixée sur un bord latéral (la, 2a) de la plaque isolante (1, 2), **caractérisé en ce que**,
- pour fixer la deuxième aile (12) sur la plaque isolante (1, 2), on enfonce une tige, en particulier un clou (14), dans la plaque isolante (1, 2), à travers la deuxième aile (12),

29. Système d'isolation, en particulier pour l'isolation thermique de bâtiments, qui présente au moins une plaque isolante (1, 2) collée sur la base (9) au moyen d'une mousse adhésive,
- sachant que la plaque isolante (1, 2) au moins prévue est fixées en position souhaitée sur la base (9) par au moins un moyen de fixation (11) prévu en plus de la mousse adhésive (10),
- sachant que le moyen de fixation présente deux ailes (11, 12) coudées l'une par rapport à l'autre et en particulier coudées à angle droit,
- sachant que pour fixer la plaque isolante (1, 2), la première aile (11) est fixée sur la base (9) et la deuxième aile (12) est fixée sur la plaque isolante (1, 2),
- sachant que la deuxième aile (12) est dotée d'un mandrin, qui, pour la fixation de la deuxième aile (12) sur la plaque isolante (1, 2), est enfoncé dans la plaque isolante (1, 2),
- sachant que plusieurs plaques isolantes (1, 2) sont collées sur la base (9),
et
- sachant que les plaques isolantes (1, 2).sont reliées ensemble par assemblage à rainures et languettes.

30. Système d'isolation selon revendication 28 ou 29, **caractérisé en ce que** la première aile (11) est fixée sur la base (9) au moyen d'un adhésif.

31. Système d'isolation selon l'une des revendications 28 à 30, **caractérisé en ce que** la mousse adhésive est configurée selon l'une des revendications 4 à 15.

32. Procédé selon l'une des revendications 28 à 31, **caractérisé en ce que** la première aile (11) est fixée sur la base (9) par un moyen de fixation (16), en particulier un clou, passé dans un alésage de l'aile (11) et inséré dans une cheville (15) enfoncée dans la base (9).

33. Système d'isolation selon la revendication 28, **caractérisé en ce que**, dans le bord latéral (1a, 2a) de la plaque isolante (1, 2) qui doit être fixé avec la deuxième aile (12), un creux (7) est prévu pour la deuxième aile (12).

34. Système d'isolation selon la revendication 28, **caractérisé en ce que** la deuxième aile (12**) est dotée d'au moins un bord destiné à la rupture préférentielle qui s'étend essentiellement parallèlement au bord extérieur de l'aile (12**), selon la revendication 23.
